Europäisches Patentamt

European Patent Office

Office européen des brevets

(19)

(11) Publication number: **0 322 175**
**A2**

## (12) EUROPEAN PATENT APPLICATION

(21) Application number: **88312017.2**

(22) Date of filing: **19.12.88**

(51) Int. Cl.4: **C08F 18/04 , C09J 3/14**

(30) Priority: **21.12.87 GB 8729702**

(43) Date of publication of application:
**28.06.89 Bulletin 89/26**

(84) Designated Contracting States:
**AT BE CH DE ES FR GB GR IT LI NL SE**

(71) Applicant: **UNILEVER PLC**
**Unilever House Blackfriars P.O. Box 68**
**London EC4P 4BQ(GB)**

(84) **GB**

Applicant: **UNILEVER NV**
**Burgemeester s'Jacobplein 1 P.O. Box 760**
**NL-3000 DK Rotterdam(NL)**

(84) **BE CH DE ES FR GR IT LI NL SE AT**

(72) Inventor: **Farmer, David Bretland**
**Spring Cottage Sutton Place Abinger**
**Hammer**
**Dorking Surrey RH5 6RP(GB)**
Inventor: **Qadri, Bashir Hassan**
**34 Bramsley Way**
**Ashtead Surrey KT21 1QY(GB)**

(74) Representative: **Roscoe, Brian Corrie et al**
**UNILEVER PLC Patents Division P.O. Box 68**
**Unilever House**
**London EC4P 4BQ(GB)**

(54) **Emulsion polymerisation.**

(57) Polymers containing vinyl C1 to C3 alkanoates, eg, vinyl acetate, as the major component are used as adhesives for, eg, packaging materials and wood laminates. The setting time of the adhesive is improved by performing the polymerisation in the presence of a water miscible chain transfer agents selected from specific classes of aldehydes, esters and mercapto-alkanols.

EP 0 322 175 A2

## EMULSION POLYMERISATION

### FIELD OF THE INVENTION:

This invention relates to aqueous emulsions containing copolymers in which the major components are vinyl C1 to C3 alkanoates, especially vinyl acetate. Copolymers of the invention are utilised as adhesives especially in the preparation of packaging materials and wood laminates.

### BACKGROUND TO THE INVENTION:

Adhesive compositions, especially those intended for use in preparing packaging materials, are required to have specific properties which are exemplified by fast setting times and low shear thinning to allow these compositions to be used on machinery adapted for coating and hence joining large areas of paper or similar cellulosic material on a high speed mechanised basis. The present invention is specifically directed to the preparation of polymer compositions in which vinyl C1 to C3 alkanoates form a major component and the emulsion polymerisation is stabilised by an effective amount of polyvinyl alcohol. Other vinyl alkanoates which are usable are vinyl propionate. Optionally the vinyl alkanoate copolymer may include other monomer feedstocks for example ethylene, dibutyl maleate, acrylic acid and longer chain length vinyl alkanoates, eg. Versatates.

For copolymers of vinyl C1 to C3 alkanoate and ethylene the level of the alkanoate will usually be at least about 60% by weight. The invention extends to copolymers including a third or additional monomers; in these formulations the level of alkanoate may be below 60% of the total but it would still form at least about 60% by weight of the alkanoate and ethylene total.

### GENERAL DESCRIPTION OF THE INVENTION:

The invention provides a process for the emulsion polymerisation of vinyl C1 to C3 alkanoate stabilised by an effective amount of polyvinyl alcohol wherein the polymerisation is performed in the presence of about 0.1% to about 0.7% by weight of monomer of a water miscible chain transfer agent selected from

    i) aldehydes of the formula RCHO wherein R is a saturated alkyl group, which may be straight chain or branched, having 1 to 4 carbon atoms, and

    ii) esters of C1 to C4 alcohols with C1 to C4 carboxylic or hydroxy carboxylic acids,

    iii) mercapto alkyl (C2 to C4) alcohols, and

    iv) mixtures thereof.

Preferably the solids content of the emulsions will be in the range 40% to 70%, more usually 50% to 65% for practical applications. The chain transfer agent is required to be present at a relatively low level and amounts below 0.5% by weight of monomers are effective and economic.

The invention extends to an emulsion of a copolymer containing vinyl C1 to C3 alkanoate as a major component stabilised by an effective amount of polyvinyl alcohol and containing from about 0.1% to about 0.7% of a water miscible chain transfer agent as defined previously. These emulsions are usable as a component of an adhesive which may be used to form a bond between two surfaces, at least one of which is cellulosic based, wherein a layer of the adhesive is placed on one or both surfaces and the two surfaces contacted under pressure for a time sufficient to form a bond.

The term 'water miscible' includes water soluble materials and materials which are dispersible at a level which provides the desired benefit. The low levels of chain transfer agent employed allow a number of materials to be used which have a relatively low water solubility.

The product of this process will have a faster setting time than the emulsion formed in the absence of the defined chain transfer agents and, with the aid of these agents, the emulsion obtained will be more resistant to a viscosity reduction on the the application of shear. The benefits are believed to derive from a reduction in the emulsion particle size when a chain transfer agent is present.

Short chain aliphatic aldehydes are listed as chain transfer agents in vinyl acetate polymerisations in 'Polymer Handbook', edited by Brandrup and Immergut, published by J. Wiley (1975).

Thiols, including 2-mercaptoethanol, are well known chain transfer agents.

The methyl and ethyl esters of lactic acid are listed as chain transfer agents in 'Polymer Handbook' although butyl lactate is not listed. We have demonstrated that butyl lactate acts as a chain transfer agent in vinyl acetate polymerisations by polymerising vinyl acetate with and without butyl lactate (0.2 and 0.4 parts per hundred of monomer). In the presence of butyl lactate the emulsion had a lower weight average molecular weight.

Methods for preparing vinyl acetate copolymer emulsions of the invention are well characterised in the literature. Polymer Synthesis (vols I and III) by Sandler & Karo (Academic Press 1974) and Preparative Methods of Polymer Chemistry (2nd Ed) by Sorenson and Campbell (Interscience 1968) provide preparative information. Methoden der Organischen Chemie (Houben-Wey) Band XIV published by George Thieme Verlag Stuttgart (1961) also provides preparative descriptions.

Additives may be optionally added to the emulsion polymer to improve adhesion performance. This compounding stage could include the addition of thickeners, plasticiser, tackifiers, keying agents or fillers. The compounded adhesive is then applied to substrates such as paper, carton or board using spray, roller or nozzle applicators.

## LITERATURE

The applicants are aware of GB1517067 (ANIC SPA) which discloses the use of polyvinyl acetate for adhesives. These copolymers are prepared in the presence of acetates and/or sulphates together with bicarbonates with the aid of a redox system and polyvinyl alcohol as protective colloid.

The use of defined aldehydes and butyl esters as "modifiers" is an optional feature. These are described as components of the reaction at levels generally above those required by the present invention and there is no disclosure of the benefit of their use as described herein.

Copolymers of ethylene and vinyl acetate are described in GB 1195816 (Wacker). These are said to be obtained in soluble (organic solvents) non-gelling form by addition of aldehydes containing 4 to 8 carbon atoms. These aldehydes are used at levels above those required in the present application and the use of polyvinyl alcohol as the protective colloid is not disclosed. The advantage of improved setting time when adhering cellulosic surfaces is not disclosed.

## TEST METHODS

The benefits of utilising the chain transfer agents of the invention will be demonstrated utilising test methods for faster setting, this will be demonstrated by a fibre tear test, and low shear thinning.

i) The speed of setting of the emulsion is tested by measuring the bonding speed between two paper sheets. A layer of emulsion 0.1 mm deep is placed on a paper sheet held on a large glass plate and a sample of high standard paper, for example Mellowtex smooth hi-white paper placed over the adhesive and pressed on to it by the aid of a roller. The top sheet was then peeled back at the rate of 10 mm per second with an angle of peel as close as possible to 180°. The fibre tear time in seconds was measured at the point when a crease occurred in the top layer of the paper in the direction of peel. This time indicates the point when the adhesive has set sufficiently to provide a bond between the two paper surfaces. The test is sufficiently reproducible to demonstrate differences in adhesives which would effect the commercial processes.

This test is an accepted method of comparing adhesive properties but the absolute values are dependent on the operator.

ii) Viscosities were measured on a Brookfield RVT viscometer (speed 20, 25°C) in both the unsheared and sheared states. High speed shearing was carried out using a Greaves mixer set at speed 5 for 5 minutes. The sheared viscosity was measured one day later.

## SPECIFIC DESCRIPTION OF THE INVENTION:

Examples of the invention will now be given to demonstrate but not limit the invention.

## Example 1

This example describes the preparation and use of a homopolymer emulsion based on vinyl acetate. 218 g of water was added to a stirred reactor (capacity 700g) and polyvinyl alcohol powder (hydrolysed to 88%) sprinkled on. This powder was a mixture of 13.2 g of a low MW polymer i.e. Gohsenol GL05 and 3.3 g of a high MW polymer i.e. Gohsenol GH17 (obtainable from Nippon Gohsei, Japan). The water was heated to 80°C while being stirred and held there for 1 hour. The solution was cooled to 70°C and ferric iron (5 ppm on monomer) added as ferric chloride (0.1% solution).

The aqueous phase was then purged with nitrogen for 15 minutes and this purging was continued during the rest of the process. A solution of propionaldehyde (0.66 g) and sodium bicarbonate (0.7 g) as buffer in water (6.0 g) was added and then three streams added to the reaction vessel over a period of three hours while holding the vessel at 70°C. This amount of propionaldehyde corresponds to 0.2% by wt of monomers. These three streams of reactants were vinyl acetate (330.0 g), a solution of hydrogen peroxide (35% w/v) 2.0 g in water (25.0 g) and a solution of sodium formaldehyde sulphoxylate (0.6 g) in 25 g of water.

At the end of the addition of the three streams the reaction medium was held at 70°C for 30 minutes and then cooled to below 30°C. An emulsion A with a solids content of 55% was obtained.

A comparative experiment was performed with omission of the propionaldehyde component to obtain a comparative emulsion B.

The emulsions A and B were tested using the fibre tear and shear thinning tests described previously; the results are given in Table I.

The preparation was repeated using 0.4 phm (0.4 % wt on monomer) propionaldehyde to provide emulsion C having a solids content of 55.5%. The fibre tear time only was measured.

TABLE I

| Emulsion | Fibre tear time (seconds) | Viscosity Psec | | |
|---|---|---|---|---|
| | | unsheared | sheared | %loss |
| A | 10 | 4.91 | 3.01 | 38.7 |
| B | 13 | 4.72 | 1.30 | 72.5 |
| C | 9 | NM | NM | NM |

It can be seen the fibre tear time and percentage loss of viscosity on shear are both reduced when propionaldehyde is present.

## EXAMPLE II

A number of chain transfer agents were tested in the process of Example I at a level of 0.2% by weight on the monomer. Two experiments with propionaldehyde as the additive utilised different initiator systems i.e. system A comprises sodium persulphate (1g) in water (25g) in place of hydrogen peroxide and system B, which is thermally initiated, comprises only sodium persulphate (1g) dissolved in water (50g). The results are given in Table II.

EP 0 322 175 A2

## TABLE II

| CHAIN TRANSFER AGENTS | MEAN PARTICLE SIZE (MICRON) | VISCOSITY (PASCAL SEC) UNSHEARED | VISCOSITY (PASCAL SEC) SHEARED | % VISCOSITY LOSS | FIBRE TEAR TIME (SEC) |
|---|---|---|---|---|---|
| NONE | 1.55 | 4.46 | 0.7 | 84.3) | |
| NONE | 1.38 | 5.80 | 0.99 | 82.9) | 13 to 17 |
| NONE | 1.25 | 4.72 | 1.3 | 72.5) | |
| ACETALDEHYDE | 1.01 | 4.2 | 2.44 | 58.1 | NM |
| PROPIONALDEHYDE | 0.6 | 6.96 | 6.58 | 5.5) | |
| PROPIONALDEHYDE | 0.71 | 4.91 | 3.01 | 38.7) | 10 to 15 |
| PROPIONALDEHYDE | 0.68 | 4.60 | NM | NM ) | |
| BUTYRALDEHYDE | 0.66 | 3.80 | NM | NM | 10 to 15 |
| 2 MERCAPTOETHANOL | 0.68 | 3.76 | 3.10 | 17.3 | 10 to 15 |
| BUTYL LACTATE | 0.65 | 3.40 | NM | NM | 10 to 15 |

SYSTEM A INITIATOR

| | | | | | |
|---|---|---|---|---|---|
| NONE | 1.20 | 6.84 | 1.64 | 76.0 | NM |
| PROPIONALDEHYDE | 0.58 | 16.9 | 14.5 | 14.1 | NM |

SYSTEM B INITIATOR

| | | | | | |
|---|---|---|---|---|---|
| NONE | 0.73 | 4.7 | 2.44 | 48.1 | NM |
| PROPIONALDEHYDE | 0.65 | 12.8 | 10.7 | 16.3 | NM |

NM - NOT MEASURED

EP 0 322 175 A2

**Claims**

1. A process for the emulsion polymerisation of vinyl C1 to C3 alkanoate stabilised by an effective amount of polyvinyl alcohol wherein the polymerisation is performed in the presence of about 0.1% to about 0.7% by weight of monomer of a water miscible chain transfer agent selected from

i) aldehydes of the formula RCHO wherein R is a saturated alkyl group, which may be straight chain or branched, having 1 to 4 carbon atoms,

ii) esters of C1 to C4 alcohols with C1 to C4 carboxylic or hydroxy carboxylic acids,

iii) mercapto alkyl (C2 to C4) alcohols, and

iv) mixtures thereof.

2. A process according to claim 1 wherein the chain transfer agent is present at a level up to about 0.5% by weight of monomers.

3. A process according to claim 1 or 2 wherein the chain transfer agent is selected from acetaldehyde, propionaldehyde, butyraldehyde, 2-mercapto ethanol and butyl lactate.

4. An emulsion of a copolymer containing vinyl C1 to C3 alkanoate as a major component stabilised by an effective amount of polyvinyl alcohol and containing from about 0.1% to about 0.7% of a water miscible chain transfer agent as defined in claim 1.

5. A method of forming an adhesive bond between two surfaces, at least one of which is cellulosic based, wherein a layer of an adhesive comprising the emulsion of claim 2 is placed on one or both surfaces and the two surfaces contacted under pressure for a time sufficient to form a bond.